# EUROPEAN PATENT APPLICATION

(11) **EP 4 002 156 A1**
(43) Date of publication of application: **25.05.2022**
(21) Application number: 21208396.8
(22) Date of filing: 16.11.2021
(51) Int. Cl.: G06F 16/332

(54) **SYSTEM AND METHOD FOR PRODUCT SEARCHING BASED ON NATURAL LANGUAGE PROCESSING**

(30) Priority: 16.11.2020 US 202063114164 P
(71) Applicant: Heyday Technologies Inc., Montreal, Québec H2W 2R2 (CA)
(72) Inventor: Tremblay, Jordan Prince, J2L 3A2 Bromont (CA); Menard, Stéphane, H2W 2B2 Montreal (CA); Dahmani, Ouamer, H1X 3P1 Montreal (CA); Rousseau, Hugues, 2HL 0B9 Montreal (CA); Bordeleau, David, H1Y 3K4 Montreal (CA)
(74) Representative: Cabinet Beaumont

(57) **Abstract**

There is provided a method and system for product searching based on Natural Language Processing (NLP). The method comprises receiving, via a conversational user interface, user-inputted natural language input indicative of a user query, performing a classification procedure to identify, from the natural language data, a user intent and one or more products of interest associated with the user query, performing a product search, comprising querying a product database based on an outcome of the classification procedure, and triggering, based on an outcome of the product search, at least one action to be performed by a virtual agent in response to the natural language data.

## Description

### CROSS-REFERENCE TO RELATED APPLICATIONS

The present application claims the benefit of United States Provisional Patent Application No. 63/114,164 filed on November 16, 2020.

### TECHNICAL FIELD

The application relates generally to Natural Language Processing (NLP) and, more particularly, to product searching based on NLP.

### BACKGROUND OF THE ART

Nowadays, consumers heavily rely on computer technology to obtain information about brands and products. Current solutions that allow users to obtain information about a given brand or its products are generally based on full-text search. For example, on a website, a customer can type a product name in a search box meant for that purpose. If the product looked for requires some filtering (e.g., by model or age range), this information will be provided in a separate context (e.g., in a filter section). However, this is not suitable in the context of chat sessions (i.e. real-time conversations between users and a chatbot). Indeed, in such a context, it becomes critical to readily determine whether a user's sentence relates to a product search (even though the context may not suggest it), and what the product is. While some solutions based on Natural Language Processing (NLP) exist, these solutions are resource intensive and fail to be reliable given out-of-context searches, a large number of products, products unrelated to each other, or in the event that new products become available.

Therefore, improvements are needed.

### SUMMARY

In one aspect, there is provided a computer-implemented method for product searching based on Natural Language Processing (NLP). The method comprises receiving, via a conversational user interface, user-inputted natural language data, the natural language data indicative of a user query, performing, using a classification engine, a classification procedure to identify, from the natural language data, a user intent and one or more products of interest associated with the user query, performing, using a product search engine, a product search, comprising querying a product database based on an outcome of the classification procedure, and triggering, based on an outcome of the product search, at least one action to be performed by a virtual agent in response to the natural language data.

In an embodiment according to any of the previous embodiments, the method further comprises identifying an input language associated with the natural language data and performing the product search based on the input language as identified.

In an embodiment according to any of the previous embodiments, the method further comprises assigning a confidence score to the input language as identified and setting, based on at least the confidence score, a new response language to be used in at least one response message to be output by the virtual agent, via the conversational user interface, in response to the natural language data.

In an embodiment according to any of the previous embodiments, setting the new response language comprises comparing the confidence score to a threshold, when the confidence score is below the threshold, setting a current response language currently used by the virtual agent as the new response language, and when the confidence score is above the threshold, setting a language different from the current response language as the new response language.

In an embodiment according to any of the previous embodiments, performing the classification procedure comprises simultaneously or sequentially performing an intent classification procedure to identify the user intent and an entity classification procedure to identify the one or more products of interest.

In an embodiment according to any of the previous embodiments, performing the intent classification procedure comprises applying a binary classifier to the natural language data and outputting a Boolean result indicative of whether the natural language data relates to a query for the one or more products of interest.

In an embodiment according to any of the previous embodiments, performing the product search comprises extracting one or more relevant words and removing one or more non-relevant words from the natural language data, and performing a search for the one or more products using the one or more relevant words.

In an embodiment according to any of the previous embodiments, the method further comprises assigning a confidence score to an outcome of the search for the one or more products, and comparing the confidence score to a threshold.

In an embodiment according to any of the previous embodiments, triggering the at least one action at the virtual agent comprises, when the confidence score is above the threshold, generating one or more signals to cause the outcome of the search to be presented via the conversational user interface, and when the confidence score is below the threshold, applying a character n-grams based technique to improve the confidence score.

In an embodiment according to any of the previous embodiments, triggering the at least one action at the virtual agent comprises, when the confidence score is above the threshold, generating one or more signals to cause the outcome of the search to be presented via the conversational user interface, and when the confidence score is below the threshold, generating one or more signals to cause a choice of one or more relevant products to be presented via the conversational user interface to improve the confidence score.

In an embodiment according to any of the previous embodiments, triggering the at least one action at the virtual agent comprises, when the confidence score is above the threshold, generating one or more signals to cause the outcome of the search to be presented via the conversational user interface, and when the confidence score is below the threshold, generating one or more signals to cause one or more questions related to the one or more products to be presented via the conversational user interface to improve the confidence score.

In an embodiment according to any of the previous embodiments, performing the product search further comprises pre-processing the natural language data.

In another aspect, there is provided a system for product searching based on Natural Language Processing (NLP). The system comprises a processing unit and a non-transitory computer-readable memory having stored thereon program instructions executable by the processing unit for receiving, via a conversational user interface, user-inputted natural language data, the natural language data indicative of a user query, performing a classification procedure to identify, from the natural language data, a user intent and one or more products of interest associated with the user query, performing a product search, comprising querying a product database based on an outcome of the classification procedure, and triggering, based on an outcome of the product search, at least one action to be performed by a virtual agent in response to the natural language data.

In an embodiment according to any of the previous embodiments, the program instructions are executable by the processing unit for identifying an input language associated with the natural language data and for performing the product search based on the input language as identified.

In an embodiment according to any of the previous embodiments, the program instructions are executable by the processing unit for assigning a confidence score to the input language as identified and for setting, based on at least the confidence score, a new response language to be used in at least one response message to be output by the virtual agent, via the conversational user interface, in response to the natural language data.

In an embodiment according to any of the previous embodiments, the program instructions are executable by the processing unit for setting the new response language comprising comparing the confidence score to a threshold, when the confidence score is below the threshold, setting a current response language currently used by the virtual agent as the new response language, and when the confidence score is above the threshold, setting a language different from the current response language as the new response language.

In an embodiment according to any of the previous embodiments, the program instructions are executable by the processing unit for performing the classification procedure comprising simultaneously or sequentially performing an intent classification procedure to identify the user intent and an entity classification procedure to identify the one or more products of interest.

In an embodiment according to any of the previous embodiments, the program instructions are executable by the processing unit for performing the intent classification procedure comprising applying a binary classifier to the natural language data and outputting a Boolean result indicative of whether the natural language data relates to a query for the one or more products of interest.

In an embodiment according to any of the previous embodiments, the program instructions are executable by the processing unit for performing the product search comprising extracting one or more relevant words and removing one or more non-relevant words from the natural language data, and performing a search for the one or more products using the one or more relevant words.

In an embodiment according to any of the previous embodiments, the program instructions are further executable by the processing unit for assigning a confidence score to an outcome of the search for the one or more products, and comparing the confidence score to a threshold.

In an embodiment according to any of the previous embodiments, the program instructions are executable by the processing unit for triggering the at least one action at the virtual agent comprising, when the confidence score is above the threshold, generating one or more signals to cause the outcome of the search to be presented via the conversational user interface, and, when the confidence score is below the threshold, applying a character n-grams based technique to improve the confidence score.

In an embodiment according to any of the previous embodiments, the program instructions are executable by the processing unit for triggering the at least one action at the virtual agent comprising, when the confidence score is above the threshold, generating one or more signals to cause the outcome of the search to be presented via the conversational user interface, and, when the confidence score is below the threshold, generating one or more signals to cause a choice of one or more relevant products to be presented via the conversational user interface to improve the confidence score.

In an embodiment according to any of the previous embodiments, the program instructions are executable by the processing unit for triggering the at least one action at the virtual agent comprising, when the confidence score is above the threshold, generating one or more signals to cause the outcome of the search to be presented via the conversational user interface, and, when the confidence score is below the threshold, generating one or more signals to cause one or more questions related to the one or more products to be presented via the conversational user interface to improve the confidence score.

In an embodiment according to any of the previous embodiments, the program instructions are executable by the processing unit for pre-processing the natural language data for performing the product search.

In a further aspect, there is provided a non-transitory computer medium for receiving, via a conversational user interface, user-inputted natural language data, the natural language data indicative of a user query, performing a classification procedure to identify, from the natural language data, a user intent and one or more products of interest associated with the user query, performing a product search, comprising querying a product database based on an outcome of the classification procedure, and triggering, based on an outcome of the product search, at least one action to be performed by a virtual agent in response to the natural language data.

Any of the above features may be used together, in any combination.

### DESCRIPTION OF THE DRAWINGS

Reference is now made to the accompanying figures in which:
FIG. 1 is a flowchart of a method for product searching based on Natural Language Processing (NLP), in accordance with an illustrative embodiment;
FIG. 2 is a flowchart of the step of FIG. 1 of performing language identification based on received input text, in accordance with an illustrative embodiment;
FIG. 3A is a flowchart of the step of FIG. 1 of performing a product search, in accordance with an illustrative embodiment;
FIG. 3B is a flowchart of the step of FIG. 3A of proceeding with a product search based on intent classification and entity classification, in accordance with an illustrative embodiment;
FIG. 4 is a flowchart of the step of FIG. 1 of determining next action(s) to be performed, in accordance with an illustrative embodiment;
FIG. 5 is a schematic diagram of a system for product searching based on NLP, in accordance with an illustrative embodiment; and
FIG. 6 is a schematic diagram of an application running on the processor of FIG. 5, in accordance with an illustrative embodiment.

It will be noted that throughout the appended drawings, like features are identified by like reference numerals.

### DETAILED DESCRIPTION

Embodiments described herein relate to Natural Language Processing (NLP), which is a field of computer science and artificial intelligence (Al) for natural language understanding, speech recognition, natural-language generation, and the like. As used herein, the term "virtual agent" may refer to one or more computing components configured to automatically converse (i.e. define the conversation flow) with a human (referred to herein as a "user" or "customer") in real-time using text, speech, or a combination thereof, based on NLP. In one embodiment, the virtual agent is integrated with a chatroom to receive queries from one or more users. In particular, the virtual agent may implement an interactive "chatbot" configured to interact with users in real-time (e.g., during a chat session) via an interface application (also referred to herein as a "conversational user interface" or a "virtual agent interface"), which is associated with an electronic messaging platform (or other suitable dialogue system) and is provided on a user device. As used herein, the term "real-time" should be understood to refer to a conversation or interaction between a virtual agent (or chatbot) and user(s) where messages are exchanged within a timeframe of about one (1) to two (2) seconds.

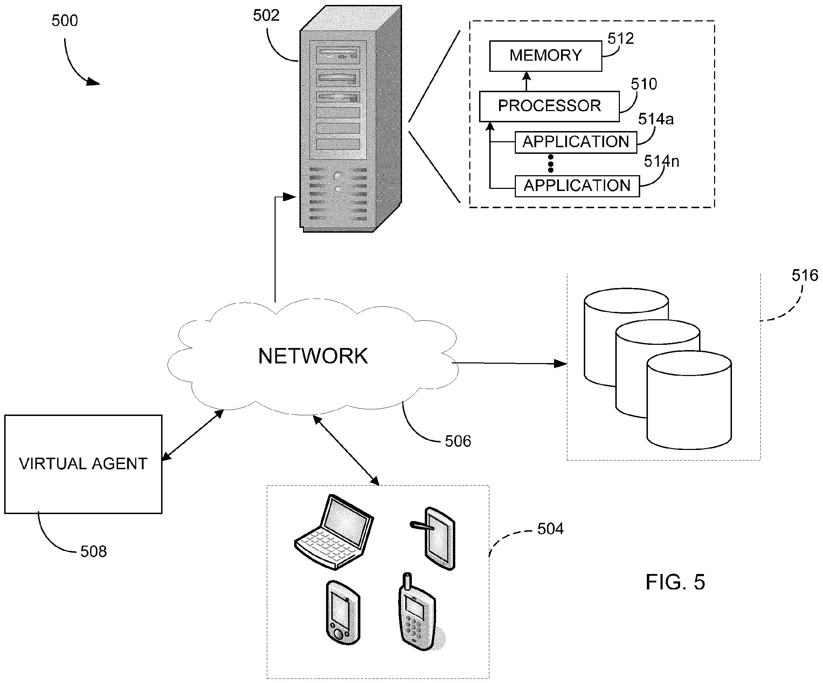

As will be described herein with reference to FIG. 5, the user device may comprise any portable or handheld communication device, such as a mobile phone, a smartphone, a personal digital assistant (PDA), or the like, adapted to communicate over at least one network. The network is capable of carrying data and can involve wired connections, wireless connections, or a combination thereof. The network may involve different network communication technologies, standards and protocols, for example. The network may include the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these.

The virtual agent is configured to provide, via the interface application, a real-time output related to the information requested by the users. In this manner, a dialogue is established in real-time between the virtual agent and each user. In one embodiment, the interface application can be installed on the user device to display an interface of visual elements representative of the current chat session. Any suitable visual elements may apply. Users may be registered and authenticated (e.g., using a login, unique identifier, and password for example) prior to being provided access to the chat sessions and the interface application. In particular, a unique identifier (e.g., a username) may be assigned to each user in order to uniquely identify the user (and accordingly distinguish users from one another) during the chat session. It should however be understood that, in some embodiments, access to the chat sessions and interface application may be granted without prior authentication.

In one embodiment, the virtual agent is configured to converse with users using text. As will be described further below, the systems and methods described herein use machine learning (ML) and/or AI techniques (i.e. an NLP model) to determine whether a user's query (i.e. the input text, also referred to herein as a "natural language input", provided by the user as input during the conversation with the virtual agent) is a query for product(s), i.e. relates to a product search. The determination is illustratively performed automatically, in real-time (i.e. during the chat session), and accurately, even when the context of the user's message does not suggest that the query relates to a product search. The systems and methods described herein are also configured to use the NLP model to computationally identify product(s) the user is inquiring about (referred to herein as an "entity classification") as well as to computationally identify the user's intent (referred to herein as an "intent classification") based on the input text. At least one suitable action to be performed next (e.g., which dialogue the virtual agent should present to the user) is then determined accordingly, in real-time. The user then makes a selection in response to the action.

In this manner, the systems and methods described herein may advantageously obtain useful information from the text input by users during a conversation with the virtual agent and transform the input text into structured information in order to build the conversation flow between the user and the virtual agent in real-time. It should be understood that the systems and methods described herein may be applicable to a broad range of application domains where it is desirable to promptly understand users' queries and to answer such queries in real-time, meaningfully and efficiently. The systems and methods described herein may allow to manage multi-domain conversations more efficiently and using fewer computing resources than with conventional technologies. For example, the same conversational user interface may be used for both sales domain conversations (e.g., user queries related to product searches) and support domain conversations (e.g., user queries about store locations, shipping policies, or the like). Moreover, the systems and methods described herein may be applied to a broad range of products (e.g., sports equipment, electronics, appliances, etc.) and may, as such, allow to recognize a wide variety of product search queries. By allowing for more efficient processing of the user input, which can in turn reduce computer processing cycles, power consumption, memory consumption, and processing bandwidth usage, the systems and methods described herein can enhance the operation of computer systems (e.g., virtual agents) used to interface with users using NLP.

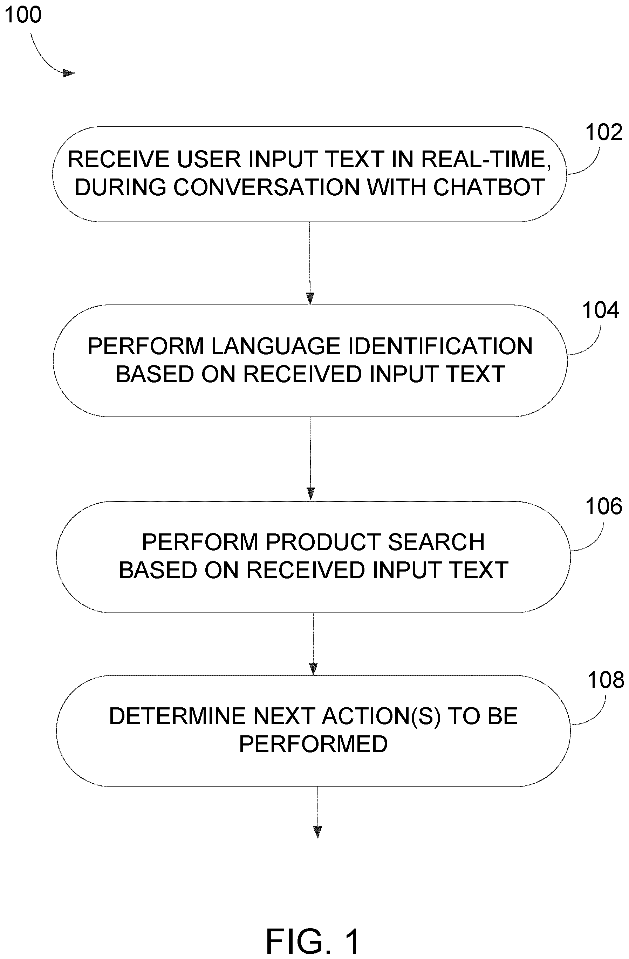

Referring to FIG. 1, a method 100 for product searching based on NLP will now be described in accordance with one embodiment. At step 102, input text is received in real-time from a user sending message(s) through the messaging platform, during a conversation (e.g. a chat session) between the user and a virtual agent. The input text may comprise an inquiry about a given brand and/or product. The input text may be input by the user using any suitable input device (e.g., using a keyboard associated with the user device), via the interface application. It should also be understood that, in some embodiments, the user may use an audio input device (e.g., a microphone) to provide their input (e.g., the brand and/or product inquiry). The audio input data may be converted into the input text using any suitable speech-to-text decoder (e.g., a Sphinx decoder). The decoder may translate the audio input data into text using a phonetic dictionary or acoustic model. In some embodiments, a representation of the input text may be generated for subsequent processing, the representation of the input text comprising a sequence of data elements with at least one data field containing a data representation of the input text and a sequence identifier identifying the position of the input text in a series of communications.

In one embodiment, the input text comprises short sentences that include a number of keywords and full sentences used by the method 100 to proceed with product searching. In particular, and as described elsewhere, the method 100 applies (at steps 104 and 106) NLP inference on multiple models (built from custom trained and/or pre-trained models using ML training algorithms, data augmentation, and various datasets) to obtain structured information. The NLP response is then used (at step 108) by a dialog manager to make a decision on the virtual agent's next response, which can include an action to fetch additional information from an internal or external product database. A rich message (comprising, for example, a carousel interface comprising a plurality of frames that can be shuffled to display different content, image(s), price(s), title(s), etc.) is then generated and sent back to the user.

Still referring to FIG. 1, identification of the language of the input text is first performed (step 104). This presumes the possibility of multi-language conversations between the virtual agent and the user. The next step 106 is then to proceed with a product search, based on the input text received at step 102 and on the outcome of the language identification performed at step 104. The next action(s) to be performed by the virtual agent during the chat session are then determined at step 108, based on the outcome of the language identification and product search stages. In one embodiment and as will be described further below, the next action(s) comprise presenting (e.g., using a dialog manager associated with the virtual agent) one or more dialogues to the user. For this purpose, one or more communication signals may be generated and output to the virtual agent to cause the one or more dialogues to be rendered (e.g., using the dialog manager) on the conversational user interface.

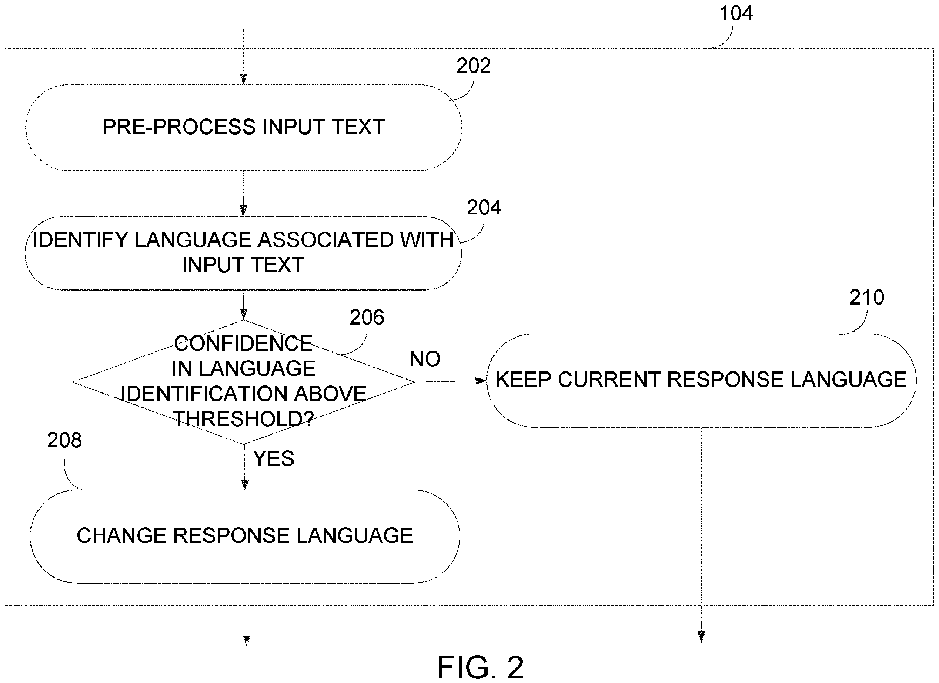

Referring now to FIG. 2, in one embodiment, step 104 of performing language identification may comprise pre-processing the input text at step 202. It should be understood that the pre-processing step 202 may, in some embodiments, be optional. In other embodiments, it may be desirable to pre-process the input text at step 202 in order to improve the performance (e.g., accuracy) of the systems and methods described herein. Pre-processing of the input text at step 202 (i.e. for language identification) may comprise converting the input text to lowercase and/or removing symbol(s) from the input text. Other embodiments may apply.

Still referring to FIG. 2, after the input text has been optionally pre-processed, the next step 204 is to identify the language (referred to herein as an "input language") associated with the received input text. For example, by performing step 204, it is possible to identify that the input text "Are you open today?" is in the English language while the input text "Etes-vous ouvert aujourd'hui?" is in the French language. The language identification as determined at step 204 may be stored in memory for subsequent use.

Step 204 may be achieved using any suitable technique. In one embodiment, when the input text comprises a single word, one or more dictionaries are built and the input text is correlated therewith to identify the language associated with the input text. If the word from the input text cannot be found in any of the dictionaries, step 204 returns an indication that the language of the input text is unknown.

In one embodiment, the systems and methods described herein are able to identify two languages, namely French and English, and, for this purpose, a French dictionary and an English dictionary may be used. Still, it should be understood that this is for illustrative purposes only and that other languages may apply.

When the input text comprises more than one word, a Naive Bayes technique (i.e. based on applying Baye's theorem with strong independent assumptions between features) with character n-grams (i.e. contiguous sequences of n characters from the input text) is illustratively used to determine the language (e.g., English or French) of the input text. In one embodiment, the output of the Naive Bayes model is a floating point number having a value between zero (0) and one (1). Each language has a pre-determined number range associated therewith. If the output of the pre-trained model is in a range associated with a given language, the given language is identified at step 204 as being the language of the input text.

If the language of the input text cannot be readily identified using the dictionaries or the Naive Bayes model, it is determined that the language is neither French nor English. A pre-trained conversational language identification model may then be used to detect the language other than French and English. In one embodiment, the pre-trained conversational language identification model is configured to detect the language of the input text from a variety of (e.g., about one hundred) languages.

In one embodiment, the default language used by the virtual agent (referred to herein as the "response language") is French and the systems and methods described herein are illustratively configured to detect messages received in any other language (e.g., in English) and to automatically determine the language (i.e. the response language) to be used for the next dialogue presented by the virtual agent (i.e. to update the language of the response message output by the virtual agent in real-time). For this purpose, when it is determined (at step 204) that the received input text is in a given language that differs from the default language (e.g., an English sentence is received as input from the user), it is assessed at step 206 whether the confidence in the language identification (performed at step 204) is above a predetermined confidence threshold.

In one embodiment, step 206 may comprise assessing whether the input text contains a number of words in the given language (identified at step 204) which is above a given threshold. If this is the case, it can be determined that the given language was properly identified at step 204, meaning that the confidence level in the language identification is above the confidence threshold. Since the given language identified at step 204 differs from the default language, the next step 208 is then to change the response language. In one embodiment, step 208 comprises changing the response language from the default language to the language of the input text identified at step 204 (e.g. setting the response language to English). Otherwise, if it is determined at step 206 that the input text contains a number of words in the given language which is below the given threshold, it can be determined that the given language was not properly identified at step 204 and that the confidence level in the language identification is below the confidence threshold. The next step 210 is thus to use the current (or default) response language (e.g., French) for the virtual agent's response.

In another embodiment, step 206 may comprise using rules based on message history to assess the confidence in the language identification performed at step 204 and setting the response language accordingly. For example, step 206 may comprise first assessing whether the input text is the first message received from the user during the current chat session. If this is the case, the language of the next dialogue presented by the virtual agent (i.e. the language of the virtual agent's response to the input text) is changed at step 208. If it is determined at step 206 that the input text is not the first message received from the user, step 206 may further comprise assessing whether the last two (2) messages received from the user were written in the same language. If this is the case (e.g. the last two (2) responses were written in English), the response language is changed (step 208), e.g. set to English rather than to the default French language. Otherwise, the current (or default) response language (e.g., French) is kept (step 210).

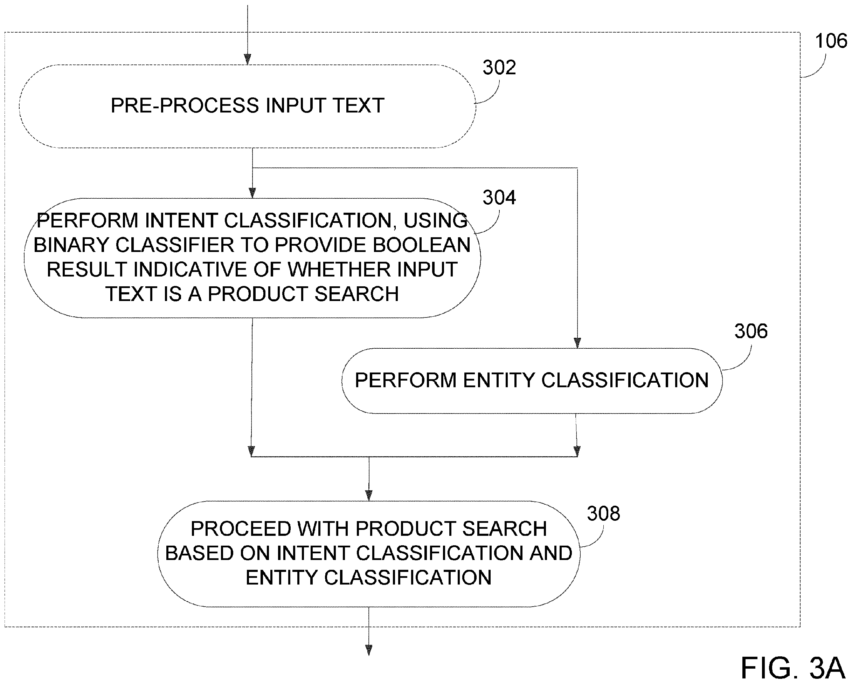

Referring now to FIG. 3A in addition to FIG. 1, after language identification has been performed at step 104, the next step 106 is to perform a product search, based on the input text received at step 102 and on the outcome of the language identification performed at step 104. In one embodiment, step 106 entails searching for the most relevant product(s) containing word(s) from the user's input text. For this purpose, in one embodiment and as will be discussed further below, two (2) real-time product search procedures may be performed: intent classification and entity classification. In one embodiment, both classifications are performed in parallel (i.e. simultaneously). In another embodiment, intent classification and entity classification are performed sequentially.

Prior to proceeding with intent classification and entity classification, the input text may be pre-processed at step 302. It should be understood that the pre-processing step 302 may, in some embodiments, be optional. In other embodiments, it may be desirable to pre-process the input text at step 302 in order to improve performance. Pre-processing the input text at step 302 (i.e. for product search) may comprise a number of sub-steps including, but not limited to, removing symbols, replacing double space by single space, removing beginning and end spaces if present, removing accents, singularizing nouns, converting ideograms (e.g., emojis, smileys, and the like) to text, retaining specific words based on pre-determined Part-of-Speech (POS) tags (e.g., adjectives, nouns, proper nouns, numbers, verbs, etc.), retaining hyphens, and discarding common stop words or stop words from a curated list specific to the product search. These pre-processing sub-steps may be performed using any suitable technique including, but not limited to, using language dictionaries and Regular Expression (Regex). Other embodiments may apply. It should be understood that the pre-processing sub-steps may be performed in any order or simultaneously. Also, one or more of the pre-processing sub-steps described herein may be performed at step 302.

Referring back to FIG. 3A, after the input text has been optionally pre-processed at step 302, intent classification is performed at step 304 and entity classification at step 306. In one embodiment, steps 304 and 306 are performed in parallel (i.e. simultaneously). In another embodiment, steps 304 and 306 are performed sequentially. Product search may then proceed at step 308 based on the intent classification performed at step 304 and the entity classification performed at step 306.

The step 304 of performing intent classification illustratively comprises applying a binary classifier to the input text to provide a Boolean result indicative of whether or not the input text relates to a product search (versus something else such as a query about store opening hours, greetings, or the like). In other words, the output of the binary classifier is "True" if a product search is recognized from the user's input text and "False" otherwise. For example, the input texts "Blue running shoes" and "Red camping chair", which each relate to a product search, evaluate to "True" while the input text "Do you ship to Canada?", which does not relate to a product search, evaluates to "False". In one embodiment, the output vector(s) of the pre-trained model used for the pre-processing step 302 of FIG. 3A are used as input to train the binary classifier for subsequently outputting the Boolean result indicative of whether the input text is a product search.

Any suitable ML technique may be used to implement the binary classifier. In one embodiment, a deep neural network is used. In some embodiments, the binary classifier uses a so-called "simple classifier" model that is trained using an augmented dataset. The augmented dataset may be created using any suitable technique and pre-processed (e.g., in the manner described above with reference to step 302 of FIG. 3A). In one embodiment, the augmented dataset may use any suitable e-commerce website taxonomy, any suitable tool for performing data augmentation, along with a custom-built internal product database (comprising names, brands, models, colors, and product categories for a large number of products). The number of product search samples in the augmented dataset may be balanced against the number of non-product search samples. In one embodiment, language fragment templates may be used as the tool to perform data augmentation. In particular, the language fragment templates may be used to generate multiple possible combinations that form diverse sentences. Other embodiments may apply and the embodiments described herein may use any suitable technique to create the augmented dataset.

Still referring to FIG. 3A, entity classification is performed at step 306 to determine from the user's input text the entity (e.g., the product and associated product parameters) for which the user is seeking information. For example, from the input text "Do you have red cars?", step 306 identifies the product as "cars" and the product's color as "red". Entity classification may be performed using a training set generated with any suitable technique including, but not limited to, Regex, Conditional Random Field (CRF), a curated list of synonyms, a curated list of sentences with tags, and/or a custom-built product database.

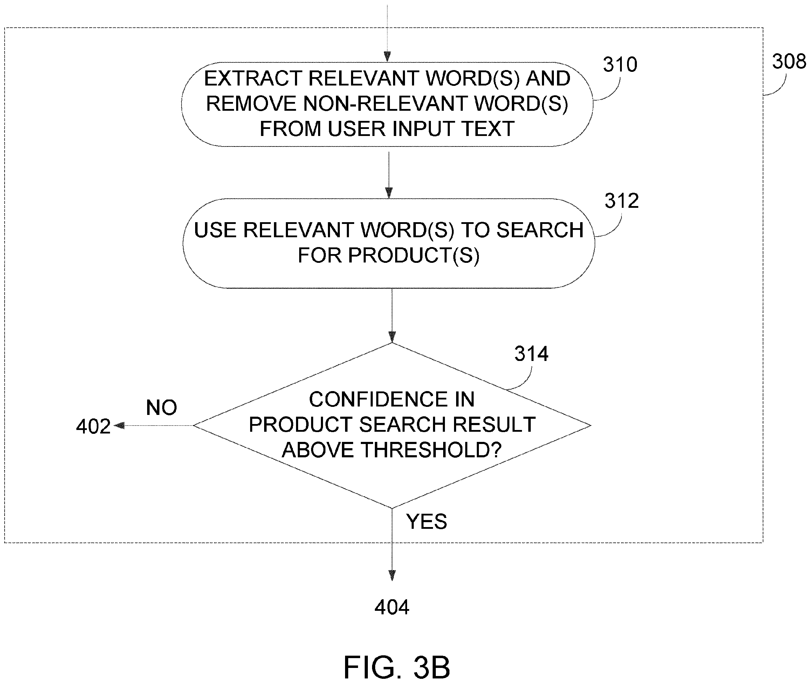

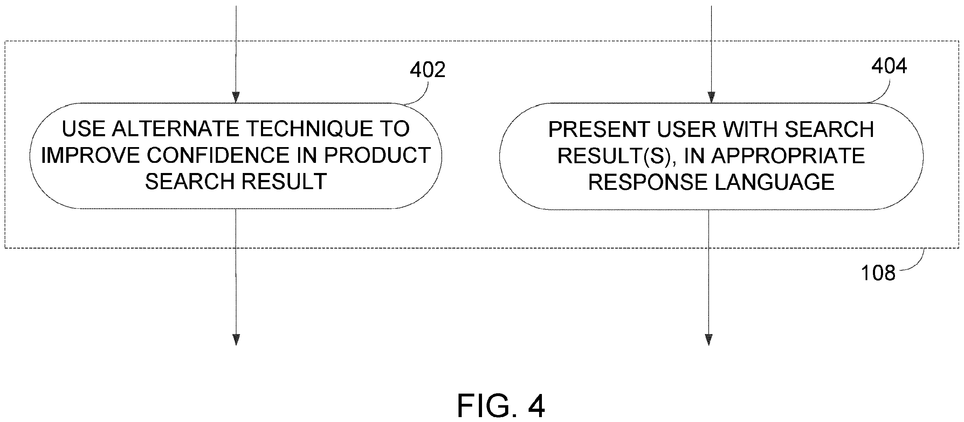

Referring now to FIG. 3B in addition to FIG. 3A, the step 308 of proceeding with the product search based on the intent classification and the entity classification performed at steps 304 and 306 illustratively comprises extracting one or more relevant words (i.e. words relevant to the product search) and removing one or more non-relevant words (i.e. words irrelevant to the product search) from the input text at step 310. For example, from the input text "I am looking for blue running shoes", the words "blue" and "running shoes" will be identified as relevant and extracted. The words "I", "am", "looking" and "for" may be identified as non-relevant words and removed. Any suitable technique including, but not limited to, using a curated list of stop words or part-of-speech tagging, may apply for identification (and removal) of non-relevant word(s) and the extraction of relevant word(s). The one or more relevant words are then used to search for one or more relevant products at step 312. The product search is performed at step 312 by querying a product database (or other suitable data repository) using the one or more relevant words as input. In one embodiment, step 312 comprises using the relevant word(s) to perform a fuzzy search in an ever growing database of existing products. In other embodiments, step 312 comprises performing a combination of fuzzy search and k-nearest neighbour search. Any other suitable technique may apply. In one embodiment, a confidence level (or relevancy score) having any suitable range (e.g., from zero (0) to ten (10)) is associated with each result of the product search performed at step 312. The confidence in the product search in turn determines which dialogue should be presented to the user (step 108 of FIG. 1), as illustrated in steps 402 and 404 of FIG. 4 and discussed further below.

Referring to FIG. 4 in addition to FIG. 3B, after the product search has been performed at step 312, the next step 314 is to determine whether the confidence level (or relevancy score) associated with the product search performed at step 312 is above a given threshold. The threshold may be determined by the NLP model, based on the current application domain. If the confidence level is not above the threshold (i.e. the product search result is too imprecise such that a product search has not been identified with sufficient precision at step 312 or too many results are obtained as an outcome of step 312), the next step 402 (illustrated in FIG. 4) is to use an alternate technique to improve the confidence level in the product search result. In one embodiment, step 402 comprises using the virtual agent to present the user with a choice as a carousel interface of relevant products (or any other user interface element allowing the user to browse through the set of relevant products) or with one or more questions for the purpose of further narrowing down the product search. In another embodiment, step 402 comprises applying a character n-grams-based technique.

If it is determined at step 314 that the confidence in the product search results is above the threshold (i.e. product search intent is found as a result of performing step 312), the next step 404 is to present the user with the search result(s), in the appropriate response language (as determined in FIG. 2). The user then makes a selection, based on which the NLP model described herein is further trained.

Looking now at a detailed example for illustrative purposes, a user may connect to a chat session (e.g., upon accessing, using the user device, a website associated with a given brand or product) and begin a live conversation with a virtual agent. The user seeking product information about the given brand or product may provide input text (i.e. one or more messages) during the conversation with the virtual agent. For example, the user may enter the following input text as their first message: "Hi, I'm John. I'm looking for Nike^{™} Vaporfly^{™} shoes. Ideally in red". The input text is then received (step 102 of FIG. 1) and language identification is performed (step 104 of FIG. 1). The input text is identified as being in English and the language of the virtual agent's response to the user's input text (which is the user's first message during the current chat session) is then set as English.

Product search is then performed (step 106 of FIG. 1): intent classification (step 304 of FIG. 3A) may result in "False" and entity classification (step 306 of FIG. 3A) may identify the product as "shoes", the product's brand as "Nike^{™}", and the product's color as "red". The method may then proceed with performing a product search based on the results of the intent classification and the entity classification. For this purpose, relevant word(s) are extracted (and non-relevant word(s) removed) from the input text (step 310 of FIG. 3B). As a result, the words "Nike^{™}", "Vaporfly^{™}", "shoes", and "red" are identified as relevant for the product search, and the words "Hi", "I'm", "John", "looking", "for", "Ideally", and "in" are identified as non-relevant. The relevant words are then used to perform a search (e.g., a fuzzy search) in a database of existing products (step 312 of FIG. 3B) and product information (e.g., product identifier (ID) information) may be fetched accordingly.

The confidence level in the product search is then assessed (step 314 of FIG. 3B) to determine the next action(s) to be performed. Because the confidence level in the outcome of the product search is above a predetermined threshold (e.g., 75%), the user is then presented with the search results (step 404 of FIG. 4), which may comprise information associated with the product ID. The search results may include, but are not limited to, the product name, price, and stock level. In one embodiment, the following response is presented: "Hi <userName>, here is what I have: <productList>", where userName corresponds to the customer's username information and productList corresponds to the search results. For instance, continuing with the current example, the virtual agent may present the following dialogue to the user: "Hi John, here is what I have: Nike^{™} Vaporfly^{™} Red, 199$, 0 in stock, notification when available. Nike^{™} Vaporfly^{™} Pink, 199$, 3 in stock, buy. Nike^{™} Alphafly^{™} Red, 259$, 2 in stock, buy.".

The conversation with the user may then continue further, with the customer inputting additional queries. For instance, the following input text may be received from the user: "Avez-vous des promotions?". The language of the input text may accordingly be identified as French, as per step 204 of FIG. 2. The method may further determine (step 206 of FIG. 2) that this message is not the first message received from the user. The method may then assess whether the last two messages from this user were written in the same language. Since the prior message was written in English, it is determined that the last two messages were not written in the same language and the response language therefore remains in English (step 210 of FIG. 2). The virtual agent thus presents a next dialogue to the customer in English, for example: "Here are our current deals: Nike^{™} Pegasus, 15% discount, buy.".

In response, the user may input additional text, such as "Et quelle est votre politique de retour?". The language of the input text may accordingly be identified as French. The method may further determine that this message is not the first message received from the user and that the last two messages from this user were written in the same language (i.e. in French). As a result, the response language is changed to French (step 208 of FIG. 2) and the virtual agent accordingly presents the next dialogue in response to the user's last message. For example, the following dialogue may be presented to the user in response to their query: "Vous avez 30 jours pour retoumer votre produit dans la boîte originale". The process may then end with the user making an appropriate selection, such as purchasing the product (e.g., by selecting a "Buy" button presented to the user via a suitable interface application) and checking out. A final dialogue (e.g., "Merci d'avoir commandé chez Nike^{™}. Bonne course!") may then be presented to the customer. In one embodiment, step 208 is performed by the dialog manager.

In some embodiments, rather than presenting the chat session as a chat bubble (e.g. positioned at the lower right corner of a webpage presented to the user via the interface application), a conversational widget may be made part of the webpage. The conversation between the user and the virtual agent may then be put in the core of the website. It should however be understood that other embodiments may apply. For instance, the chat session may be presented as a full page. It should therefore be understood that the systems and methods described herein may use different embodiments of the conversational user interface, depending on the application domain. For example, in some embodiments, the conversational user interface may comprise a search box (also referred to as a "search bar") incorporated in a website. Other embodiments may apply.

In yet other embodiments, the user may be transferred to a persistent communication channel of their choice (e.g., email, text message, or the like). For example, a user entering an automated chat session on a given website may ask for follow up, either by a human or in an automated way (e.g. restock or new product arrival notifications).

FIG. 5 illustrates a system 500 for product searching based on NLP, in accordance with one embodiment. The system 500 may comprise one or more server(s) 502 adapted to communicate with a plurality of user devices 504 via a network 506, such as the Internet, a cellular network, Wi-Fi, or others known to those skilled in the art. As discussed herein above, the devices 504 may provide users access to the system 500 for performing product search(es) and conversing (e.g., via a messaging platform) with a virtual agent 508 (e.g., implementing an automated chatbot) over the network 506. The devices 504 may comprise any device, such as a laptop computer, a PDA, a tablet, a smartphone, or the like, adapted to communicate over the network 506.

The virtual agent 508 may be configured to provide a dynamic user experience with natural language interaction. In one embodiment, the virtual agent 508 may comprise a layered architecture, with each layer being defined by software instructions (that may be written in the same or different programming language). For example, the virtual agent 508 may be implemented as comprising a front-end layer (e.g., React Framework or Javascript), a backend layer (e.g., Springboot Framework or Java), and a data processing layer (e.g., Python). Each layer of the virtual agent 508 may be configured to communicate with other layers without data transformation. The virtual agent 508 may use WebSockets to enable real-time communication. In some embodiments, the virtual agent 508 may enable single sign-in for users over a Hypertext Transfer Protocol (HTTP) session that captures user information of a user having signed in and transfers the information to the front-end layer using WebSocket protocol. In this manner, the virtual agent 508 may be personalized and alleviate the need for the user to input his/her information to sign in.

The front-end layer may be configured to receive user-inputted text and to send a data representation of the input text to the backend layer. In some embodiments, the front-end layer may be configured to generate one or more signals to provide (e.g., via the interface application associated with the virtual agent 508) an output on the devices 504. For example, the response message(s) of the virtual agent 508 to the user's input may be provided using the front-end layer and presented on the devices 504 via the interface application. In some embodiments, the interface application is a visual interface comprising one or more visual elements, as described herein above. In other embodiments, the interface application is an audio interface such that a speech-to-text decoder (e.g., a Sphinx decoder) and a text-to-speech encoder (e.g., a Microsoft^{™} Speech Application Programming Interface (SAPI) text-to-speech converter) is used to convert audio data to text, and vice versa.

The server 502 may comprise a series of servers corresponding to a web server, an application server, and a database server. These servers are all represented by server 502 in FIG. 5. The server 502 may comprise, amongst other things, a processor 510 coupled to a memory 512 and having a plurality of applications 514a, ..., 514n running thereon. The processor 510 may access the memory 512 to retrieve data. The processor 510 may be any device that can perform operations on data. Examples include, but are not limited to, a central processing unit (CPU), a microprocessor, a front-end processor, a reconfigurable processor, other suitably programmed or programmable logic circuits, or any combination thereof. The applications 514a, ..., 514n are coupled to the processor 510 and configured to perform various tasks as explained herein in more detail. It should be understood that while the applications 514a, ..., 514n presented herein are illustrated and described as separate entities, they may be combined or separated in a variety of ways. It should be understood that an operating system (not shown) may be used as an intermediary between the processor 510 and the applications 514a, ..., 514n.

The memory 512 accessible by the processor 510 may receive and store data. The memory 512 may be a main memory, such as a high speed Random Access Memory (RAM), or an auxiliary storage unit, such as a hard disk or flash memory. The memory 512 may be any other type of memory, such as a Read-Only Memory (ROM), Erasable Programmable Read-Only Memory (EPROM), electrically-erasable programmable read-only memory (EEPROM), Ferroelectric RAM (FRAM), or optical storage media such as a videodisc and a compact disc. Also, although the system 500 is described herein as comprising the processor 510 having the applications 514a, ..., 514n running thereon, it should be understood that cloud computing may also be used. As such, the memory 512 may comprise cloud storage.

One or more databases 516 may be integrated directly into the memory 512 or may be provided separately therefrom and remotely from the server 502 (as illustrated). In the case of a remote access to the databases 516, access may occur via any type of network 506, as indicated above. The databases 516 described herein may be provided as collections of data or information organized for rapid search and retrieval by a computer. The databases 516 may be structured to facilitate storage, retrieval, modification, and deletion of data in conjunction with various data-processing operations. The databases 516 may consist of a file or sets of files that can be broken down into records, each of which consists of one or more fields. Database information may be retrieved through queries using keywords and sorting commands, in order to rapidly search, rearrange, group, and select the field. The databases 516 may be any organization of data on a data storage medium, such as one or more servers. As discussed above, the system 500 may use cloud computing and it should therefore be understood that the databases 516 may comprise cloud storage.

In one embodiment, the databases 516 are secure web servers and Hypertext Transport Protocol Secure (HTTPS) capable of supporting Transport Layer Security (TLS), which is a protocol used for access to the data. Communications to and from the secure web servers may be secured using Secure Sockets Layer (SSL). Identity verification of a user may be performed using usernames and passwords for all users. Various levels of access authorizations may be provided to multiple levels of users.

Alternatively, any known communication protocols that enable devices within a computer network to exchange information may be used. Examples of protocols are as follows: IP (Internet Protocol), UDP (User Datagram Protocol), TCP (Transmission Control Protocol), DHCP (Dynamic Host Configuration Protocol), HTTP (Hypertext Transfer Protocol), FTP (File Transfer Protocol), Telnet (Telnet Remote Protocol), SSH (Secure Shell Remote Protocol).

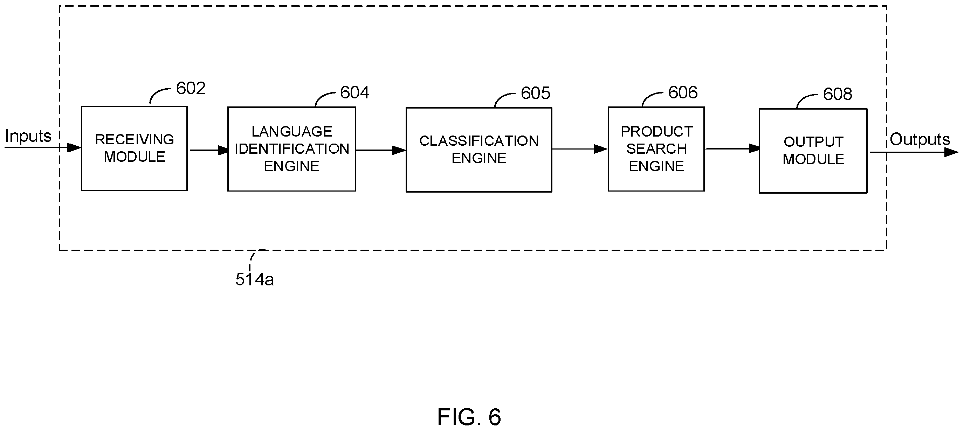

FIG. 6 is an exemplary embodiment of an application 514a running on the processor 510 of FIG. 5. The application 514a illustratively comprises a receiving module 602 configured to perform the method steps (e.g., step 102) described herein with reference to FIG. 1, a language identification engine 604 configured to perform the method steps (e.g., steps 202 to 210) described herein with reference to FIG. 2, a classification engine 605 configured to perform the method steps (e.g., steps 302 to 306) described herein with reference to FIG. 3A, a product search engine 606 configured to perform the method steps (e.g., step 308) described herein with reference to FIG. 3A and the method steps (e.g., steps 310 to 314) described herein with reference to FIG. 3B, and an output module 608 configured to output information received from any of the modules 604, 605, and 606 as well as output next action(s) to be performed by the virtual agent based on the classification, as described herein above. For instance, the output module 608 may be configured to generate and output one or more communications signals to cause the virtual agent to present response message(s) via the conversational user interface.

As used herein, the term "engine" is directed to a computer implemented mechanism including one or more software and/or hardware components that are specially configured to perform one or more actions and/or one or more computations. The engine, in some embodiments, describes software implemented code modules or components. In other embodiments, the engine describes hardware implementations including specially configured machines. A combination of hardware and software is possible.

Embodiments of the methods described herein (e.g., method 100 of FIG. 1) may be implemented by way of a non-transitory computer-readable storage medium having a computer program stored thereon. The computer program may comprise computer-readable instructions which cause a computer (e.g., the processor 510 of FIG. 5) to operate in a specific and predefined manner to perform the method steps. The instructions may be implemented in a high level procedural or object oriented programming or scripting language, or a combination thereof, to communicate with or assist in the operation of a computer system. Alternatively, the instructions may be implemented in assembly or machine language. The language may be a compiled or interpreted language. The instructions may be readable by a general or special-purpose programmable computer. Different program libraries can be used to create the instructions for the processes such as, but not limited to, codecs, Scikit-learn (sklearn), Natural Language Toolkit (NLTK), NumPy, operator, and sys, for example.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. It should however be understood that the embodiments described herein may also provide virtual machines. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Various aspects of the systems and methods described herein may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be apparent to those skilled in the art that changes and modifications may be made without departing from this invention in its broader aspects. The scope of the following claims should not be limited by the embodiments set forth in the examples, but should be given the broadest reasonable interpretation consistent with the description as a whole.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A computer-implemented method for product searching based on Natural Language Processing (NLP), the method comprising:
receiving, via a conversational user interface, user-inputted natural language data, the natural language data indicative of a user query;
performing, using a classification engine, a classification procedure to identify, from the natural language data, a user intent and one or more products of interest associated with the user query;
performing, using a product search engine, a product search, comprising querying a product database based on an outcome of the classification procedure; and
triggering, based on an outcome of the product search, at least one action to be performed by a virtual agent in response to the natural language data.

2. The method of claim 1, further comprising identifying an input language associated with the natural language data and performing the product search based on the input language as identified.

3. The method of claim 2, further comprising assigning a confidence score to the input language as identified and setting, based on at least the confidence score, a new response language to be used in at least one response message to be output by the virtual agent, via the conversational user interface, in response to the natural language data.

4. The method of claim 3, wherein setting the new response language comprises:
comparing the confidence score to a threshold;
when the confidence score is below the threshold, setting a current response language currently used by the virtual agent as the new response language; and
when the confidence score is above the threshold, setting a language different from the current response language as the new response language.

5. The method of any one of the preceding claims, wherein performing the classification procedure comprises simultaneously or sequentially performing an intent classification procedure to identify the user intent and an entity classification procedure to identify the one or more products of interest.

6. The method of claim 5, wherein performing the intent classification procedure comprises applying a binary classifier to the natural language data and outputting a Boolean result indicative of whether the natural language data relates to a query for the one or more products of interest.

7. The method of any one of the preceding claims, wherein performing the product search comprises:
extracting one or more relevant words and removing one or more non-relevant words from the natural language data; and
performing a search for the one or more products using the one or more relevant words.

8. The method of claim 7, further comprising:
assigning a confidence score to an outcome of the search for the one or more products;
comparing the confidence score to a threshold;
when the confidence score is above the threshold, generating one or more signals to cause the outcome of the search to be presented via the conversational user interface; and
when the confidence score is below the threshold, one of:
applying a character n-grams based technique to improve the confidence score;
generating one or more signals to cause a choice of one or more relevant products to be presented via the conversational user interface to improve the confidence score; and
generating one or more signals to cause one or more questions related to the one or more products to be presented via the conversational user interface to improve the confidence score.

9. A system for product searching based on Natural Language Processing (NLP), the system comprising:
a processing unit; and
a non-transitory computer-readable memory having stored thereon program instructions executable by the processing unit for:
receiving, via a conversational user interface, user-inputted natural language data, the natural language data indicative of a user query;
performing a classification procedure to identify, from the natural language data, a user intent and one or more products of interest associated with the user query;
performing a product search, comprising querying a product database based on an outcome of the classification procedure; and
triggering, based on an outcome of the product search, at least one action to be performed by a virtual agent in response to the natural language data,.

10. The system of claim 9, wherein the program instructions are executable by the processing unit for identifying an input language associated with the natural language data and for performing the product search based on the input language as identified.

11. The system of claim 10, wherein the program instructions are executable by the processing unit for :
assigning a confidence score to the input language as identified; and
setting, based on at least the confidence score, a new response language to be used in at least one response message to be output by the virtual agent, via the conversational user interface, in response to the natural language data,
further wherein setting the new response language comprises:
comparing the confidence score to a threshold;
when the confidence score is below the threshold, setting a current response language currently used by the virtual agent as the new response language; and
when the confidence score is above the threshold, setting a language different from the current response language as the new response language.

12. The system of any one of claims 9 to 11, wherein the program instructions are executable by the processing unit for performing the classification procedure comprising simultaneously or sequentially performing an intent classification procedure to identify the user intent and an entity classification procedure to identify the one or more products of interest.

13. The system of claim 12, wherein the program instructions are executable by the processing unit for performing the intent classification procedure comprising applying a binary classifier to the natural language data and outputting a Boolean result indicative of whether the natural language data relates to a query for the one or more products of interest.

14. The system of any one of claims 9 to 13, wherein the program instructions are executable by the processing unit for performing the product search comprising:
extracting one or more relevant words and removing one or more non-relevant words from the natural language data; and
performing a search for the one or more products using the one or more relevant words.

15. The system of claim 14, wherein the program instructions are further executable by the processing unit for:
assigning a confidence score to an outcome of the search for the one or more products;
comparing the confidence score to a threshold;
when the confidence score is above the threshold, generating one or more signals to cause the outcome of the search to be presented via the conversational user interface; and
when the confidence score is below the threshold, one of:
applying a character n-grams based technique to improve the confidence score;
generating one or more signals to cause a choice of one or more relevant products to be presented via the conversational user interface to improve the confidence score; and
generating one or more signals to cause one or more questions related to the one or more products to be presented via the conversational user interface to improve the confidence score.
